# EUROPEAN PATENT APPLICATION

(11) **EP 3 639 689 A1**
(43) Date of publication of application: **22.04.2020**
(21) Application number: 19177215.1
(22) Date of filing: 29.05.2019
(51) Int. Cl.: A43D 1/02, A43D 1/08, A43D 25/18, G05B 19/401, G01B 11/24, B65G 15/42, A43D 111/00, G01B 11/00

(54) **PROCESSING METHOD USING DEPTH IMAGE DETECTION**

(30) Priority: 15.10.2018 TW 107136201
(71) Applicant: Lips Corporation, 114 Taipei City (TW)
(72) Inventor: CHIEN, Yu-Hsuan, 114 Taipei City (TW)
(74) Representative: Viering, Jentschura & Partner mbB Patent- und Rechtsanwälte

(57) **Abstract**

A processing method using depth detection includes: an image capturing step implemented by using a camera device (300) to capture a depth image (M1) of a device under test (DUT) (O) and a surrounding environment around the DUT (O), and then using a signal processing module (600) to carry out a modifying process so as to transform the depth image (M1) into a three-dimensional (3D) image (M2) corresponding in shape to the DUT (O); a planning step implemented by using the signal processing module (600) to define spraying spots (S1-S8) on the 3D image (M2) and to calculate normal vectors (N) of the 3D image (M2) respectively corresponding in position to the spraying spots (S1-S8); and a spraying step implemented by using a spraying device (400) to sequentially spray portions of the DUT (O) respectively corresponding in position to the spraying spots (S1-S8), in which a spraying direction of the spraying device (400) is substantially parallel to the normal vector (N) of the corresponding spraying spot (S1-S8).

## Description

### CROSS-REFERENCE TO RELATED PATENT APPLICATION

This application claims the benefit of priority to Taiwan Patent Application No. 107136201, filed on October 15, 2018. The entire content of the above identified application is incorporated herein by reference.

Some references, which may include patents, patent applications and various publications, may be cited and discussed in the description of this disclosure. The citation and/or discussion of such references is provided merely to clarify the description of the present disclosure and is not an admission that any such reference is "prior art" to the disclosure described herein. All references cited and discussed in this specification are incorporated herein by reference in their entireties and to the same extent as if each reference was individually incorporated by reference.

### FIELD OF THE DISCLOSURE

The present disclosure relates to a processing method, and more particularly to a processing method using depth detection.

### BACKGROUND OF THE DISCLOSURE

A conventional processing method is implemented to a device under test (DUT), such as an outsole of a shoe that is transported by a flat surface (e.g., on a conveyor belt). For example, when the conventional processing method is used to produce an outsole, the outsole is disposed on a surface of the conveying device, and then the outsole is processed. However, since the thickness of the outsole is not large, it is difficult for a camera device to distinguish the outsole from the surface of the conveying device. Accordingly, the conventional processing method does not use a depth image detection for the DUT (e.g., the outsole), so that the manufacturing yield and production efficiency of the DUT cannot be improved by the use of the depth image detection.

### SUMMARY OF THE DISCLOSURE

In response to the above-referenced technical inadequacies, the present disclosure provides a sensor package structure which improves the conventional sensor package structures.

In one aspect, the present disclosure provides a processing method using a depth detection, which includes an image capturing step, a planning step, and a spraying step. The image capturing step is implemented by using a camera device to capture a depth image of a device under test (DUT) and a surrounding environment around the DUT, and then using a signal processing module to carry out a modifying process so as to transform the depth image into a three-dimensional (3D) image that corresponds in shape to the DUT. The planning step is implemented by using the signal processing module to define a plurality of spraying spots on the 3D image and to calculate a plurality of normal vectors of the 3D image that respectively correspond in position to the spraying spots. The spraying step is implemented by using a spraying device to sequentially spray portions of the DUT respectively corresponding in position to the spraying spots. Moreover, a spraying direction of the spraying device is substantially parallel to the normal vector of the corresponding spraying spot.

In certain embodiments, in the planning step, the signal processing module is operated to define a first spraying path by the spraying spots, and in the spraying step, a nozzle of the spraying device sprays a part of the DUT corresponding in position to the first spraying path.

In certain embodiments, in the planning step, the signal processing module is operated to define a first spraying path by the spraying spots. Wherein, in any three of the spraying spots in the first spraying path that are adjacent to each other, two of the three spraying spots respectively located at two opposite outer sides are spaced apart from each other by a first distance and jointly define a connecting line therebetween, and the other one of the three spraying spots is defined as a middle spraying spot and is spaced apart from the connecting line by a second distance. When the second distance is less than a predetermined ratio of the first distance that is less than or equal to 100%, the signal processing module is operated to remove the middle spraying spot and to redefine a second spraying path. In the spraying step, a nozzle of the spraying device sprays a part of the DUT corresponding in position to the second spraying path.

Therefore, the processing method of the present disclosure can be implemented to capture a depth image of the DUT and to define the spraying spots and the corresponding normal vectors, so that the manufacturing yield and production efficiency of the DUT can be improved by the use of the depth image of the DUT.

These and other aspects of the present disclosure will become apparent from the following description of the embodiment taken in conjunction with the following drawings and their captions, although variations and modifications therein may be affected without departing from the spirit and scope of the novel concepts of the disclosure.

### BRIEF DESCRIPTION OF THE DRAWINGS

The present disclosure will become more fully understood from the following detailed description and accompanying drawings.
FIG. 1 is a perspective view of a production apparatus with the depth image detection according to a first embodiment of the present disclosure.
FIG. 2 is a perspective view showing a conveying device of the production apparatus according to the first embodiment of the present disclosure.
FIG. 3 is a top view of FIG. 2.
FIG. 4 is a side view of FIG. 2.
FIG. 5 is an enlarged view of portion V of FIG. 3.
FIG. 6 is an enlarged view of portion VI of FIG. 4.
FIG. 7 is a perspective view showing the conveying device in another configuration according to the first embodiment of the present disclosure.
FIG. 8 is a perspective view showing a device under test (DUT) located on an upstream area of the production apparatus according to the first embodiment of the present disclosure.
FIG. 9 is an enlarged top view of a part of FIG. 8.
FIG. 10 is an enlarged side view of the part of FIG. 8.
FIG. 11 is a perspective view showing the DUT located between the upstream area and a downstream area of the production apparatus according to the first embodiment of the present disclosure.
FIG. 12 is a perspective view showing the DUT located on the downstream area of the production apparatus according to the first embodiment of the present disclosure.
FIG. 13 is a functional block view of a production apparatus with depth image detection according to a second embodiment of the present disclosure.
FIG. 14 is a schematic view showing a depth image generated in a processing method according to the second embodiment of the present disclosure.
FIG. 15 is a schematic view showing a three-dimensional (3D) image generated in the processing method according to the second embodiment of the present disclosure.
FIG. 16 is an enlarged view of portion XVI of FIG. 15.
FIG. 17 is a schematic view showing a spraying step of the processing method that adapts a first spraying path according to the second embodiment of the present disclosure.
FIG. 18 is a schematic view showing a spraying step of the processing method that adapts a second spraying path according to the second embodiment of the present disclosure.

### DETAILED DESCRIPTION OF THE EXEMPLARY EMBODIMENTS

The present disclosure is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a", "an", and "the" includes plural reference, and the meaning of "in" includes "in" and "on". Titles or subtitles can be used herein for the convenience of a reader, which shall have no influence on the scope of the present disclosure.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present disclosure or of any exemplified term. Likewise, the present disclosure is not limited to various embodiments given herein. Numbering terms such as "first", "second" or "third" can be used to describe various components, signals or the like, which are for distinguishing one component/signal from another one only, and are not intended to, nor should be construed to impose any substantive limitations on the components, signals or the like.

### [First Embodiment]

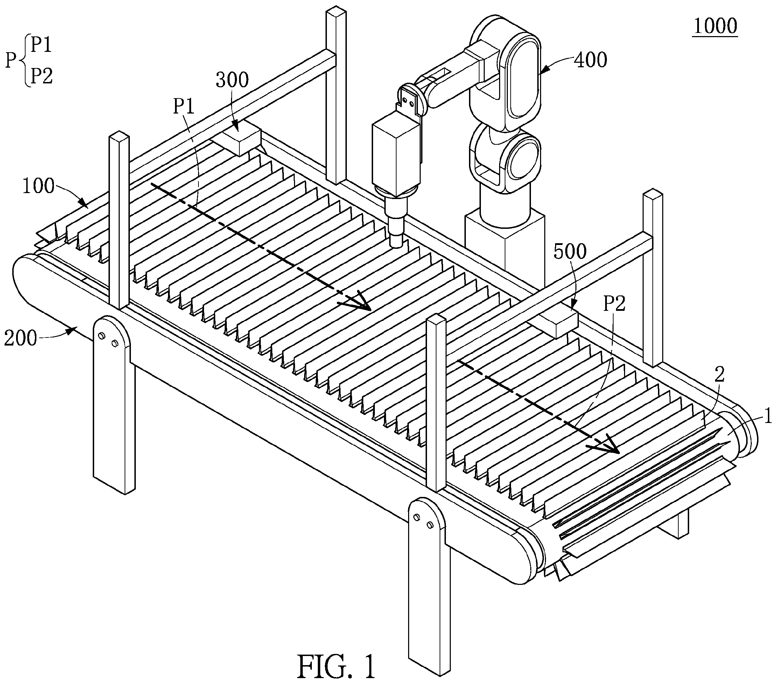

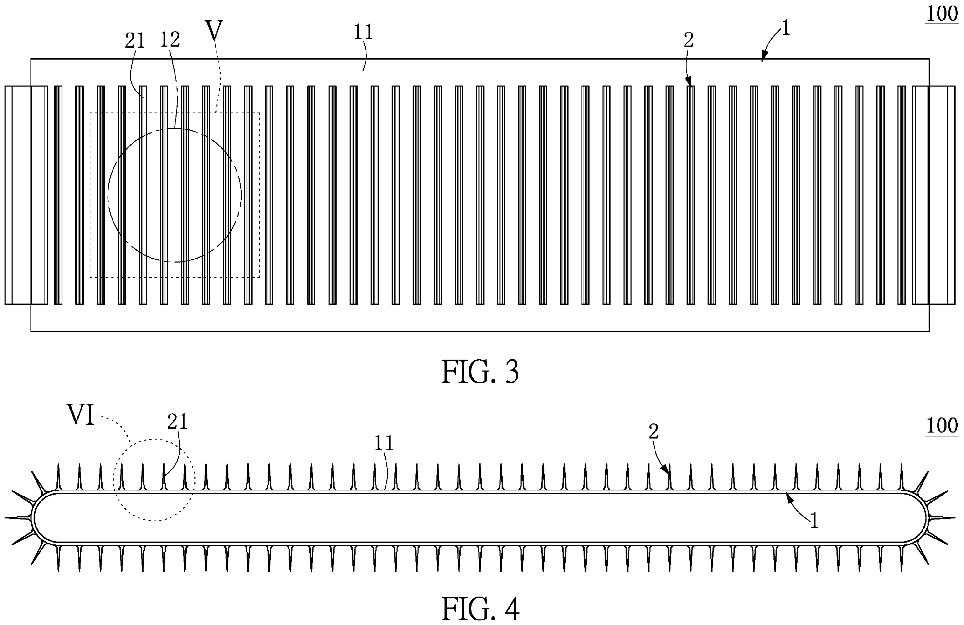

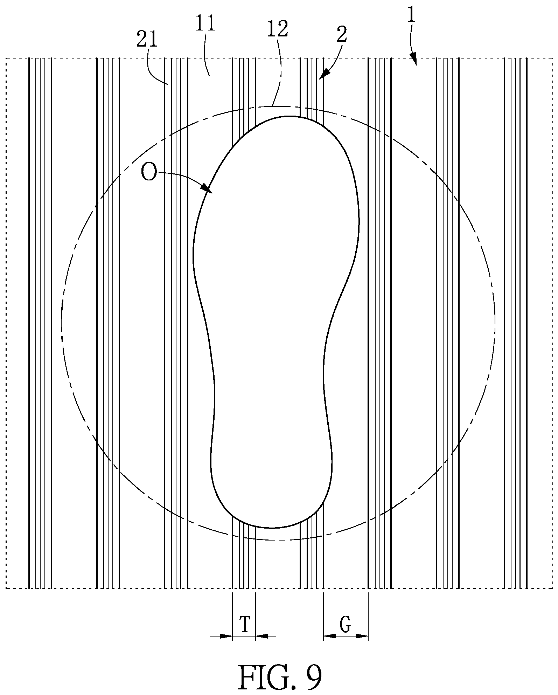

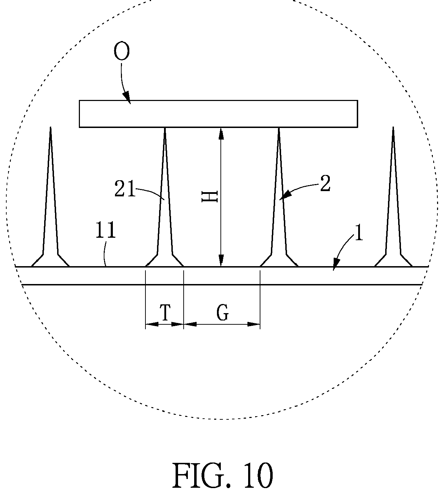

Referring to FIG. 1 to FIG. 12, a first embodiment of the present disclosure provides a production apparatus 1000 with a depth image detection. As shown in FIG. 1, the production apparatus 1000 in the present embodiment is an outsole production apparatus, but the present disclosure is not limited thereto. The production apparatus 1000 includes a stand 200, a conveying device 100 disposed on the stand 200, a camera device 300, a spraying device 400, and a detecting device 500. The camera device 300, the spraying device 400, and the detecting device 500 are sequentially arranged above the conveying device 100, and correspond in position to different areas of the conveying device 100.

Moreover, the conveying device 100, the camera device 300, and the detecting device 500 in the present embodiment are fastened to the stand 200, and the spraying device 400 is fastened to a place (e.g., ground) outside of the stand 200, but the present disclosure is not limited thereto. In other embodiments of the present disclosure, the conveying device 100, the camera device 300, and the detecting device 500 can be fastened to a place (e.g., ground) outside of the stand 200, or the spraying device 400 can be fastened to the stand 200.

It should be noted that, the conveying device 100 in the present embodiment is cooperated with the stand 200, the camera device 300, the spraying device 400, and the detecting device 500, but the present disclosure is not limited thereto. In other embodiments of the present disclosure, if the conveying device 100 is used to transport a DUT (e.g., an outsole), the conveying device 100 can be independently applied or can be in combination with other devices. The following description discloses the structure and connection relationship of each component of the production apparatus 1000.

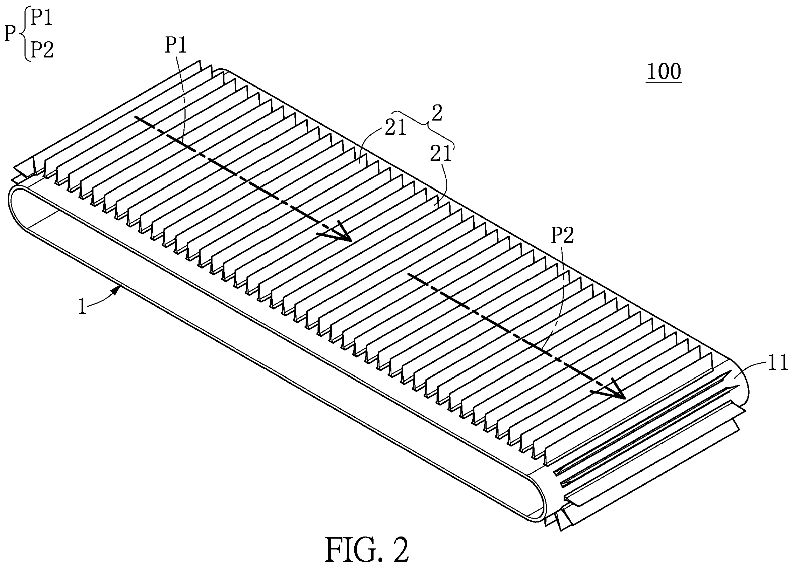

As shown in FIG. 2 to FIG. 4, the conveying device 100 includes a conveyor 1, a carrying member 2 disposed on the conveyor 1, and a driving assembly (not shown) configured to drive the conveyor 1. The driving assembly may include a motor, a chain, and gears, and the driving assembly can move the conveyor 1 by receiving electricity from an external power source (not shown).

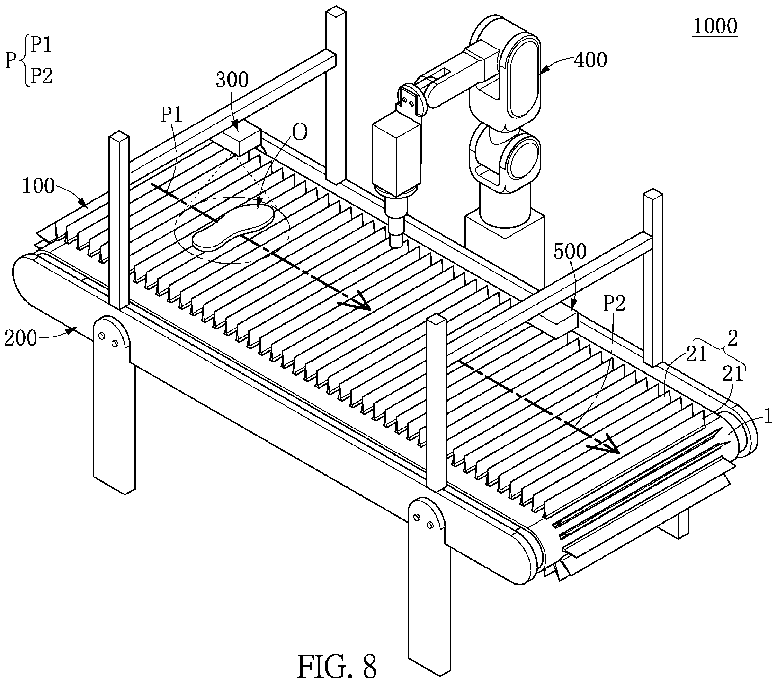

The conveyor 1 is disposed on the stand 200, and is movable along a transporting path P. The conveyor 1 in the present embodiment is arranged in a loop structure, and uses an upper half of the loop structure to cooperate with the other devices (e.g., the camera device 300, the spraying device 400, and the detecting device 500). The transporting path P sequentially defines an upstream area PI and a downstream area P2. That is to say, the DUT located on the upstream area PI (as shown in FIG. 8) can be moved toward the downstream area P2 through the movement of the conveyor 1, and the upstream area PI and the downstream area P2 in the present embodiment are arranged on the upper half of the loop structure.

Moreover, an outer surface 11 of the conveyor 1 has a detecting region 12, and the detecting region 12 in the present embodiment corresponds in position to the capturing scope of the camera device 300. For example, the detecting region 12 is a portion of the outer surface 11 that can be captured by the camera device 300, but the present disclosure is not limited thereto.

It should be noted that, the conveyor 1 in the present embodiment is a single piece structure, but the present disclosure is not limited thereto. For example, in other embodiments of the present disclosure, the conveyor 1 can be formed by a plurality of pieces.

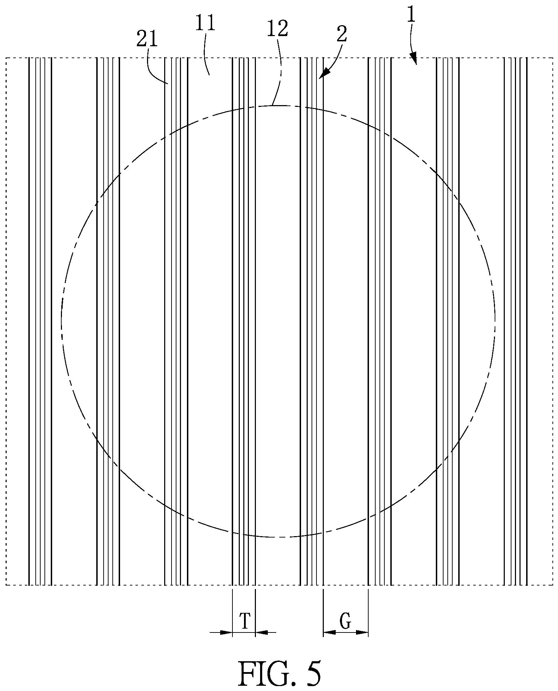

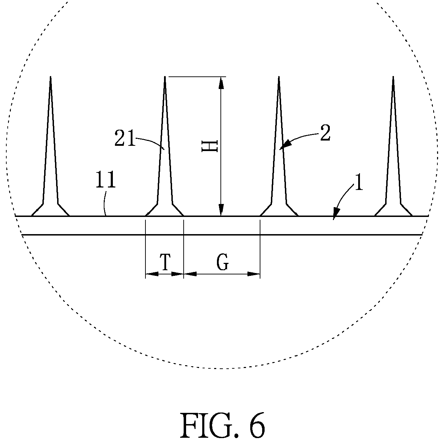

As shown in FIG. 5 and FIG. 6, the carrying member 2 is disposed on the outer surface 11 of the conveyor 1. In the present embodiment, the conveyor 1 and the carrying member 2 are made of different materials, and a bottom of the carrying member 2 is fixed on the outer surface 11 of the conveyor 1.

Moreover, in order to accurately recognize the detecting region 12 of the conveyor 1 by the camera device 300, the carrying member 2 preferably satisfies the following conditions, but the present disclosure is not limited thereto. A projected region defined by orthogonally projecting the carrying member 2 onto the detecting region 12 is smaller than or equal to 60% (e.g., 5% ∼ 60%) of an area of the detecting region 12. A height H of the carrying member 2 with respect to the outer surface 11 is larger than or equal to 3 mm, and is preferably within a range of 5 mm ∼ 20 mm.

It should be noted that, if the camera device 300 can accurately recognize the detecting region 12 of the conveyor 1, the structure of the carrying member 2 can be adjusted according to design requirements. The carrying member 2 in the present embodiment includes a plurality of carriers 21, but the present disclosure is not limited thereto. For example, in other embodiments of the present disclosure, the carrying member 2 can be a single piece structure.

As shown in FIG. 5 and FIG. 6, each of the carriers 21 is an elongated structure, and a cross-section of each of the carriers 21 parallel to the outer surface 11 gradually decreases along a direction away from the outer surface 11 (e.g., a direction from bottom to top shown in FIG. 5), but the present disclosure is not limited thereto.

Moreover, as shown in FIG. 2 and FIG. 5, longitudinal directions of the carriers 21 are parallel to each other. The longitudinal direction of each of the carriers 21 is perpendicular to the transporting path P, and is parallel to the outer surface 11 of the conveyor 1. Specifically, the carriers 21 are spaced apart from each other by the same distance, and a distance G between any two of the carriers 21 adjacent to each other is preferably larger than a maximum thickness T of each of the carriers 21 in the transporting path P, so that the camera device 300 can recognize the detecting region 12 of the conveyor 1 more clearly, but the present disclosure is not limited thereto.

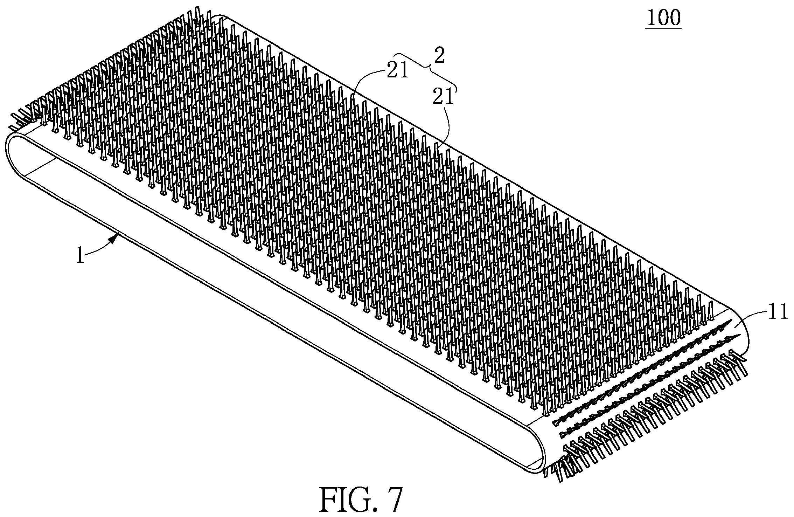

In addition, the carrier 21 can be formed in other structures. As shown in FIG. 7, each of the carriers 21 can be a pillar, and the carriers 21 are fixed on the outer surface 11 of the conveyor 1 and are spaced apart from each other.

As shown in FIG. 1, the camera device 300 is arranged above the upstream area PI of the conveyor 1. In the present embodiment the camera device 300 is directly above the upstream area PI of the conveyor 1, thereby accurately capturing images of the conveying device 100 and the DUT. The DUT in the present embodiment is an outsole O, but the present disclosure is not limited thereto.

Specifically, as shown in FIG. 8 to FIG. 10, when the outsole O is disposed on the carrying member 2, the camera 300 is configured to generate a depth image by capturing images of the outsole O, a portion of the detecting region 12, and a portion of the carrying member 2, the latter two of which are located around the outsole O. In the depth image, the conveyor 1 and the carrying member 2 can be clearly different from the outsole O by having certain characteristics (e.g., the projected region of the carrying member 2 is smaller than 60% of the area of the detecting region 12, the height H of the carrying member 2 is larger than or equal to 3 mm, the cross-section of each of the carriers 21 is tapered, and the distance G between any two adjacent carriers 21 is larger than the maximum thickness T of each of the carriers 21), so that a portion of the depth image related to the outsole O can be easily recognized.

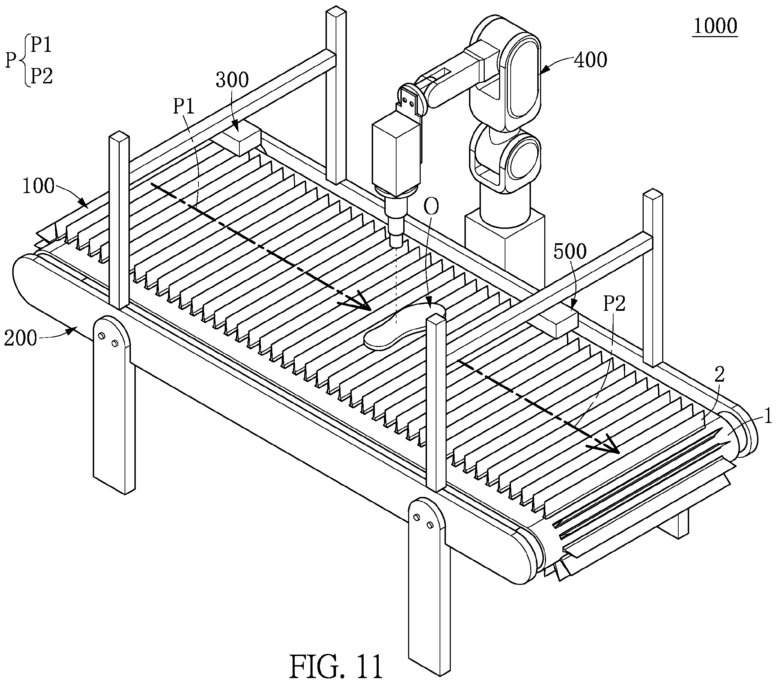

As shown in FIG. 11, the spraying device 400 is arranged above a portion of the conveyor 1 between the upstream area PI and the downstream area P2, and the spraying device 400 is configured to spray the outsole O according to the depth image. It should be noted that, the spraying device 400 in the present embodiment is a robotic arm having a sprayer, but the present disclosure is not limited thereto.

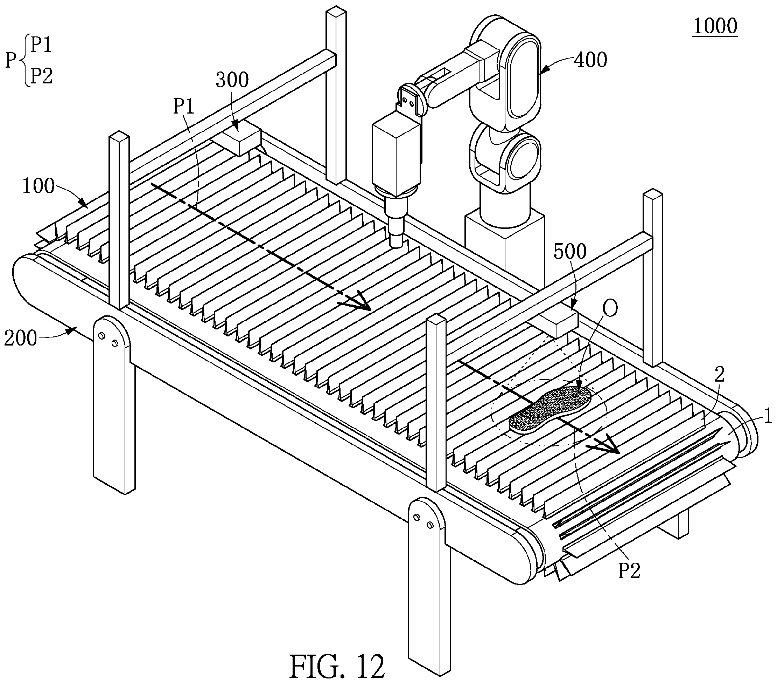

As shown in FIG. 12, the detecting device 500 is arranged above the downstream area P2 of the conveyor 1. The detecting device 500 in the present embodiment is directly above the downstream area P2 of the conveyor 1, thereby accurately capturing images of the conveying device 100 and the DUT. Specifically, as shown in FIG. 11 and FIG. 12, after the spraying device 400 sprays the outsole O, the detecting device 500 is configured to check whether the outsole O satisfies a predetermined condition.

In addition, in other embodiments of the present disclosure, the production apparatus 1000 can be provided with other devices that include a flipping device for flipping the outsole O or a sorting device for sorting the outsole O according to the detecting device 500.

### [Second Embodiment]

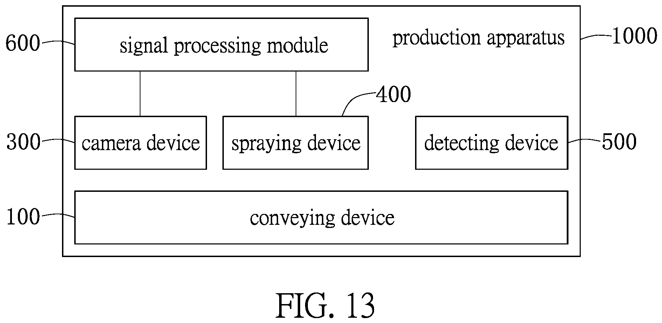

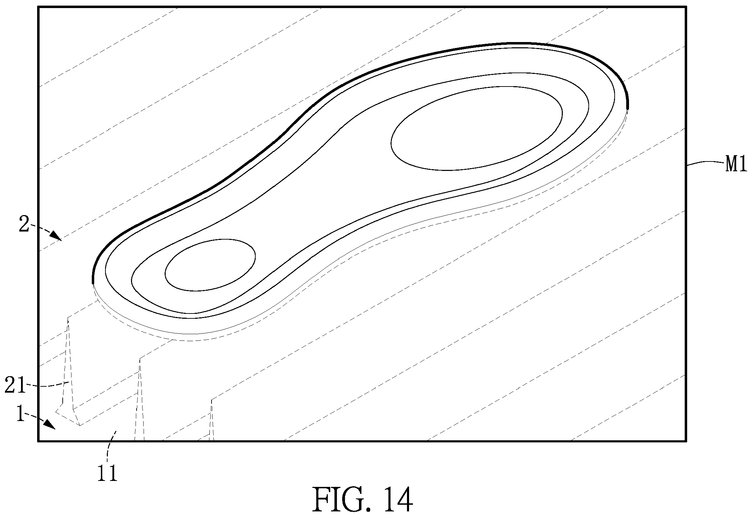

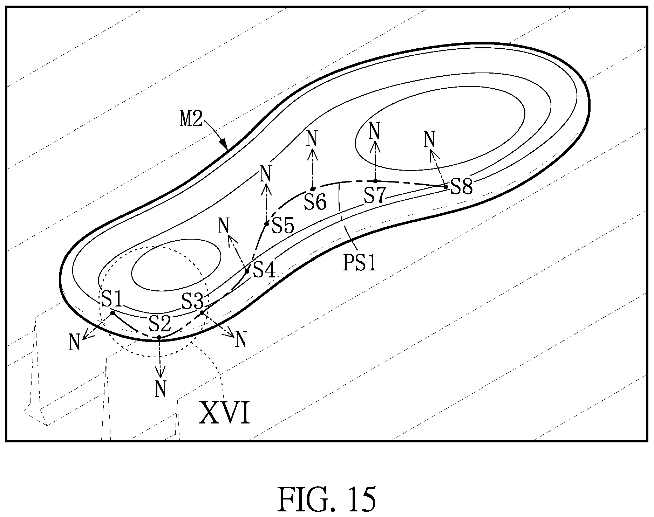

Referring to FIG. 13 to FIG. 18, a second embodiment of the present disclosure provides a processing method using the depth detection. The processing method of the present embodiment includes an image capturing step, a planning step, and a spraying step, but the present disclosure is not limited thereto. The following description sequentially discloses the image capturing step, the planning step, and the spraying step.

The image capturing step is implemented by using a camera device 300 to capture a depth image M1 of a DUT O and a surrounding environment around the DUT O, and then using a signal processing module 600 to carry out a modifying process so as to transform the depth image M1 into a three-dimensional (3D) image M2 that corresponds in shape to the DUT O. In other words, the 3D image M2 is scaled relative to the DUT O.

The planning step is implemented by using the signal processing module 600 to define a plurality of spraying spots S1-S8 on the 3D image M2 and to calculate a plurality of normal vectors N of the 3D image M2 that respectively correspond in position to the spraying spots S1-S8. The spraying spots S1-S8 of the 3D image M2 respectively maps (or correspond in position) to portions of the DUT O. In other words, the DUT O is also correspondingly defined by a plurality of spraying spots S1-S8. In addition, the number of the spraying spots S1-S8 of the 3D image M2 in the present embodiment is eight, but the number of the spraying spots S1-S8 of the 3D image M2 can be adjusted or changed according to design requirements.

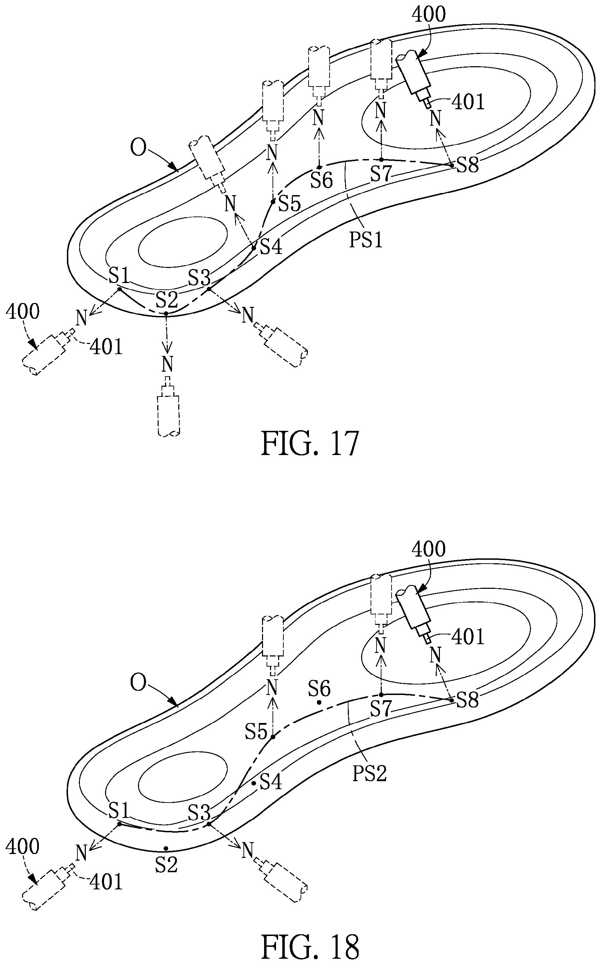

As shown in FIG. 17, the spraying step is implemented by using a spraying device 400 to sequentially spray the portions of the DUT O respectively corresponding in position to the spraying spots S1-S8. Moreover, a spraying direction of the spraying device 400 is substantially parallel to the normal vector N of the corresponding spraying spot S1-S8.

It should be noted that, the processing method of the present disclosure can be adjusted based on the above steps (i.e., the image capturing step, the planning step, and the spraying step) and according to design requirements. The following description discloses a specific example of the processing method of the present embodiment, but the present disclosure is not limited thereto.

In the example, the DUT O is limited to an outsole O of a shoe with an irregular surface, and the irregular surface of the outsole O is in a surface treatment by implementing the spraying step, but the present disclosure is not limited thereto. In other words, the spraying step is implemented to modify the irregular surface of the outsole O by a surface treatment.

Moreover, the processing method can be implemented by using the production apparatus 1000 disclosed in the first embodiment shown in FIG. 1 to FIG. 12. The production apparatus 1000 in the present embodiment further includes a signal processing module 600 electrically coupled to the camera device 300 and the spraying device 400, but the specific structure of the signal processing module 600 is not limited by the present disclosure. For example, the signal processing module 600 can be a computer externally connected to the camera device 300 and the spraying device 400, or the signal processing module 600 can be a processing chip built-in the camera device 300 or the spraying device 400.

In other words, the processing method in the present embodiment further includes a preparing step before the image capturing step, thereby providing at least partial of the components of the production apparatus 1000. For example, the preparing step can be implemented by providing a conveying device 100 that includes a conveyor 1 and a carrying member 2 disposed on an outer surface 11 of the conveyor 1, and a height H of the carrying member 2 with respect to the outer surface 11 is larger than or equal to 3 mm. Accordingly, in the image capturing step, the DUT O can be disposed on the carrying member 2 so as to be spaced apart from the outer surface 11 of the conveyor 1.

Specifically, in the modifying process of the image capturing step, the signal processing module 600 is operated to remove a portion of the depth image M1 corresponding in position to the outer surface 11 of the conveyor 1 so as to form a secondary depth image that includes portions of the depth image M1 corresponding in position to the DUT O and the carrying member 2. Moreover, a main portion of the secondary depth image corresponds in shape to the DUT O, and the signal processing module 600 is operated to remove the other portion of the secondary depth image that is a portion of the secondary depth image corresponding in position to the carrying member 2.

Further, the signal processing module 600 is operated to remove the other portion of the secondary depth image corresponding in position to the carrying member 2 by an erode manner, and then the signal processing module 600 is operated to adjust the main portion of the secondary depth image corresponding in position to the DUT O by a dilate manner so as to form the 3D image M2.

Moreover, in the planning step, the signal processing module 600 is operated to define a spiral first spraying path PS1 by the spraying spots S1-S8, and a nozzle 401 of the spraying device 400 sprays a part of the DUT O corresponding in position to the first spraying path PS1. In other words, the nozzle 401 of the spraying device 400 has a movement path that is identical to the first spraying path PS1, and the spraying device 400 is rotatable according to the normal vector N of each of the spraying spots S1-S8 of the DUT O.

Accordingly, the processing method using the depth image detection can effectively avoid the acceleration and deceleration of the spraying device 400 being too frequent by planning a plurality of the spraying points S1 to S8 as the spiral first spraying path PS1, so as to improve the spraying efficiency of the spraying device 400. It should be noted that, if the spraying spots S1-S8 are arranged too close, the moving speed of the spraying device 400 cannot be increased, and the spraying efficiency of the spraying device 400 will be decreased. Accordingly, in the planning step, if the spraying spots S1-S8 are arranged too close, the signal processing module 600 can be operated to filter the spraying spots S1-S8 as disclosed in the following description.

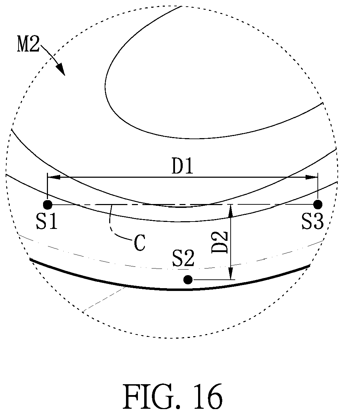

Referring to FIG. 16, in any three of the spraying spots S1-S3 in the first spraying path PS1 that are adjacent to each other, two of the three spraying spots S1-S3 are respectively located at two opposite outer sides (e.g., the two outer spraying spots SI, S3)and are spaced apart from each other by a first distance D1 and jointly define a connecting line C therebetween, and the other one (e.g., the spraying spot S2) of the three spraying spots S1-S3 is defined as a middle spraying spot S2 and is spaced apart from the connecting line C by a second distance D2. When the second distance D2 is less than a predetermined ratio of the first distance D1, wherein the predetermined ratio is no more than 100%, the signal processing module 600 deletes the spraying point S2 located at the center, and then redefines a second spraying path PS2 (as shown in FIG. 18). In the spraying step, the nozzle 401 of the spraying device 400 sprays a part of the DUT O corresponding in position to the second spraying path PS2 (as shown in FIG. 18). It should be noted that the predetermined ratio in the present embodiment is 100%, but the predetermined ratio can be adjusted according to design requirements. For example, in other embodiments of the present disclosure, the predetermined ratio can be a value in a range of 0-100 %.

In addition, the processing method further includes a detecting step after the spraying step. The detecting step is implemented by using a detecting device 500 arranged above the downstream area P2 of the conveyor 1 to check whether the DUT O satisfies a predetermined condition.

In conclusion, the processing method of the present disclosure can be implemented to capture a depth image of the DUT O and to define the spraying spots S1-S8 and the corresponding normal vectors N, so that the manufacturing yield and production efficiency of the DUT O can be improved by the use of the depth image M1.

Moreover, the processing method using the depth image detection disclosed in the embodiment of the present disclosure can effectively avoid the acceleration and deceleration of the spraying device 400 being too frequent by planning a plurality of the spraying points S1 to S8 as the spiral first spraying path PS1, so as to improve the spraying efficiency of the spraying device 400. Further, if the spraying spots S1-S8 are arranged too close, the signal processing module 600 in the processing method of the present disclosure can be operated to filter the spraying spots S1-S8 so as to increase the spraying efficiency of the spraying device 400.

In addition, the production apparatus and the conveying device in the present disclosure thereof can allow the camera device 300 to clearly recognize a device under test (e.g., an outsole O) disposed on the carrying member 2 by the cooperation of the conveyor 1 and the carrying member 2, so that the manufacturing yield and production efficiency of the DUT can be improved by a depth image from the camera device 300.

The foregoing description of the exemplary embodiments of the disclosure has been presented only for the purposes of illustration and description and is not intended to be exhaustive or to limit the disclosure to the precise forms disclosed. Many modifications and variations are possible in light of the above teaching.

The embodiments were chosen and described in order to explain the principles of the disclosure and their practical application so as to enable others skilled in the art to utilize the disclosure and various embodiments and with various modifications as are suited to the particular use contemplated. Alternative embodiments will become apparent to those skilled in the art to which the present disclosure pertains without departing from its spirit and scope.

## Claims

1. A processing method using depth detection, comprising:
an image capturing step implemented by using a camera device (300) to capture a depth image (M1) of a device under test (DUT) (O) and a surrounding environment around the DUT (O), and then using a signal processing module (600) to carry out a modifying process so as to transform the depth image (M1) into a three-dimensional (3D) image (M2) that corresponds in shape to the DUT (O);
a planning step implemented by using the signal processing module (600) to define a plurality of spraying spots (S1-S8) on the 3D image (M2) and to calculate a plurality of normal vectors (N) of the 3D image (M2) that respectively correspond in position to the spraying spots (S1-S8); and
a spraying step implemented by using a spraying device (400) to sequentially spray portions of the DUT (O) respectively corresponding in position to the spraying spots (S1-S8), wherein a spraying direction of the spraying device (400) is substantially parallel to the normal vector (N) of the corresponding spraying spot (S1-S8).

2. The processing method according to claim 1, wherein in the planning step, the signal processing module (600) is operated to define a first spraying path (PS1) by the spraying spots (S1-S8), and wherein in the spraying step, a nozzle (401) of the spraying device (400) sprays a part of the DUT (O) corresponding in position to the first spraying path (PS1).

3. The processing method according to claim 2, wherein the nozzle (401) of the spraying device (400) has a movement path that is identical to the first spraying path (PS1) and the rotation angle of the spraying device (400) is rotatable according to the normal vector (N) of each of the spraying spots (S1-S8).

4. The processing method according to claim 1, wherein in the planning step, the signal processing module (600) is operated to define a first spraying path (PS1) by the spraying spots (S1-S8), wherein in any three of the spraying spots (S1-S8) in the first spraying path (PS1) that are adjacent to each other, two of the three spraying spots (S1-S8) respectively located at two opposite outer sides are spaced apart from each other by a first distance (D1) and jointly define a connecting line (C) therebetween, and the other one of the three spraying spots (S1-S8) is defined as a middle spraying spot and is spaced apart from the connecting line (C) by a second distance (D2),; and when the second distance (D2) is less than a predetermined ratio of the first distance (D1) that is less than or equal to 100%, the signal processing module (600) is operated to remove the middle spraying spot and to redefine a second spraying path (PS2), and wherein in the spraying step, a nozzle (401) of the spraying device (400) sprays a part of the DUT (O) corresponding in position to the second spraying path (PS2).

5. The processing method according to claim 1, further comprising a preparing step before the image capturing step, wherein the preparing step is implemented by providing a conveying device (100) that includes a conveyor (1) and a carrying member (2) disposed on an outer surface (11) of the conveyor (1), and a height (H) of the carrying member (2) with respect to the outer surface (11) is larger than or equal to 3 mm, and wherein in the image capturing step, the DUT (O) is disposed on the carrying member (2) so as to be spaced apart from the outer surface (11) of the conveyor (1).

6. The processing method according to claim 5, wherein in the modifying process of the image capturing step, the signal processing module (600) is operated to remove a portion of the depth image (M1) corresponding in position to the outer surface (11) so as to form a secondary depth image, and wherein a main portion of the secondary depth image corresponds in shape to the DUT (O), and the signal processing module (600) is operated to remove the other portion of the secondary depth image.

7. The processing method according to claim 6, wherein in the modifying process of the image capturing step, the signal processing module (600) is operated to remove the other portion of the secondary depth image by an erode manner, and then the signal processing module (600) is operated to adjust the main portion of the secondary depth image by a dilate manner so as to form the 3D image (M2).

8. The processing method according to claim 5, wherein the conveyor (1) is movable along a transporting path (P), and the transporting path (P) sequentially defines an upstream area (PI) and a downstream area (P2), the camera device (300) is arranged above the upstream area (PI) of the conveyor (1), and the spraying device (400) is arranged above a portion of the conveyor (1) between the upstream area (PI) and the downstream area (P2).

9. The processing method according to claim 8, further comprising a detecting step after the spraying step, wherein the detecting step is implemented by using a detecting device (500) arranged above the downstream area (P2) of the conveyor (1) to check whether the DUT (O) satisfies a predetermined condition.

10. The processing method according to claim 1, wherein the DUT (O) is an outsole (O) of a shoe with an irregular surface, and the spraying step is implemented to modify the irregular surface of the outsole (O) by a surface treatment.
